# EUROPÄISCHE PATENTSCHRIFT

(11) **EP 1 657 042 B1**
(45) Veröffentlichungstag und Bekanntmachung des Hinweises auf die Patenterteilung: **25.06.2014**
(21) Anmeldenummer: 04027143.9
(22) Anmeldetag: 15.11.2004
(51) Int. Cl.: B29C 41/04, B29C 39/08, B29C 39/10

(54) **Schleuderguss-Verfahren zur Ausbildung einer Randeinfassung und Begrenzungsform dafür**
Centrifugal casting for edge encapsulation and mould therefore
Procédé de moulage centrifuge pour l'encadrement un bord et moule utilisant un tel procédé

(43) Veröffentlichungstag der Anmeldung: 17.05.2006
(73) Patentinhaber: IP AG, 8706 Feldmeilen (CH)
(72) Erfinder: Rudolf, Erhard, 86698 Oberndorf (DE); Fastner, Franz, 86641 Rain-Etting (DE); Glück, Markus, Dr.-Ing., 86720 Nördlingen (DE)
(74) Vertreter: Cremer, Ulrike Theresia

(56) Entgegenhaltungen:
- EP-A- 0 414 367
- DE-A1- 2 303 460
- DE-A1- 4 028 379
- US-A- 4 190 411

## Beschreibung

Die vorliegende Erfindung betrifft ein Verfahren zur Ausbildung einer Randeinfassung eines Filtermittels. Weiterhin betrifft sie eine Begrenzungsform zur Verwendung bei dem Verfahren.

In der Technik ist es oftmals notwendig, ein flaches, scheibenförmiges Element mit einer formschlüssigen Umrandung einzufassen oder mehrere flache, scheibenförmige Elemente miteinander zu fügen. Eine Möglichkeit für eine derartige Verbindung ist der randseitige Verbund mittels einer Randeinfassung. Dieser Verbund ist bei gewissen scheibenförmigen Elementen essentiell, so z. B. bei Filtermitteln. Filtermittel sind zumeist mehrlagig aufgebaut, wobei in der Regel in der Mitte ein gröberes Drainagegewebe angeordnet ist, das von zumindest jeweils einer Lage einer feineren Filtermembran umgeben ist. So führt die mechanische Beanspruchung des Schweißens im Randbereich dazu, dass Knickstellen in dem feinen Membranmaterial erzeugt werden, die später, insbesondere bei Rückspülschritten, dazu führen können, dass das Filtermittel zerstört wird. Spritzgussverfahren sind beispielsweise bei feinporigen Membranfiltern, Metall- oder Polymermembranen, nicht anwendbar, da hier die Kapillarwirkung dazu führt, dass das Kunststoff- oder Fügematerial in die Membran eindringt und dadurch die Membranen verstopft werden, so dass ein beträchtlicher Teil der Filterfläche verloren geht bzw. das Filtergewebe gänzlich verstopft wird.

Solche Probleme stellen sich auch bei der randseitigen Verbindung mehrerer Lagen eines porösen oder netzartigen Gewebes zu einem sandwichartigen scheibenförmigen Element anderer Art, nicht nur bei der Herstellung von Filtermitteln. Als Beispiel sei hier die Herstellung von Brennstoffzellen aufgeführt, genauer der Polymerelektrolytmembranbrennstoffzelle (PEMFC) und der Direkt-Methanol-Brennstoffzelle (DMFC), bei denen jeweils die Membran als Elektrolyt und die beiden Elektroden miteinander gefügt werden müssen. Hierbei stellen sich immer wieder massive Dichtigkeitsprobleme.

Die Druckschrift DE 230 3 460 A1 offenbart ein Verfahren und eine Vorrichtung zur Herstellung von Filterpatronen. Hier wird keine Randeinfassung um ein kreisrundes scheibenförmiges Filterelement hergestellt, sondern ein im Wesentlichen zylindrischer, mit Luft durchströmbarer Filterkörper erzeugt.

Die EP 0 414 367 A1 beschreibt ein Verfahren zur Ausbildung einer Randeinfassung. Es wird eine Membran eingefasst, wobei im Umfang des Dichtmasseringes der Filtratablauf angebracht wird, so dass keine allseitig dichtende Randeinfassung ausgebildet wird.

Die DE 40 28 379 A1 offenbart ein Verfahren zur Herstellung eines Filtrationsmoduls, bei welchem eine Randeinfassung um ein Filtermittel gebildet wird. Im Randabschnitt der Filtereinheiten ist ein Unfiltratkanal ausgebildet, so dass mittels dieses Verfahrens keine allseitig dichtende Randeinfassung entsteht. Dort wird bereits vorgeschlagen, der Filtermodul in eine Form einzulegen und einzelne Schichten teilweise zu verschweißen, indem ein härtbares Dichtmittel mittels Zentrifugalkraft in Randbereiche eingebracht wird.

Aufgabe der vorliegenden Erfindung ist daher, ein Verfahren bereitzustellen, mit dem um zumindest ein kreisrundes scheibenförmiges Filtermittel eine formschlüssige und allseitig dichtende Randeinfassung gebildet werden kann. Insbesondere sollen zumindest zwei scheibenförmige Elemente miteinander zu einem scheibenförmigen Filtermittel verbunden werden können, wobei diese Verbindung materialschonend und haltbar erfolgen soll. Weiterhin soll mit dem Verfahren das Fügen unterschiedlichster Materialien möglich sein und dabei soll eine abdichtende Fügung der einzelnen Elemente erfolgen.

Diese Aufgabe wird gelöst durch ein Verfahren nach Anspruch 1 und eine Begrenzungsform nach Anspruch 10. Bevorzugte Ausführungsbeispiele sind Gegenstand der Unteransprüche.

Erfindungsgemäß wird ein Verfahren bereitgestellt, mit dem mindestens um ein kreisrundes scheibenförmiges Filtermittel herum eine formschlüssige und allseitig dichtende Randeinfassung gebildet wird. Gemäß einem bevorzugten Ausführungsbeispiel werden zumindest zwei scheibenförmige Elemente randseitig formschlüssig durch die Randeinfassung verfügt. Hierfür wird eine Begrenzungsform bereitgestellt, in welcher das zumindest eine kreisrunde scheibenförmige Filtermittel angeordnet wird. Das scheibenförmige Filtermittel kann in die Begrenzungsform sowohl eingelegt als auch eingestellt werden. Die Begrenzungsform umgibt das Filtermittel wenigstens randseitig. Gemäß einem bevorzugten Ausführungsbeispiel besteht zwischen der Begrenzungsform und dem Rand des Filtermittels ein gewisser Abstand. Das zumindest eine Filtermittel wird dann in Drehung versetzt, wodurch sich Vergussmasse, die in die Begrenzungsform eingebracht wird oder worden ist, im Randbereich des Filtermittels ansammelt und dort aushärtet. Dadurch wird die Randeinfassung hergestellt. Je nach Anordnung des scheibenförmigen Filtermittels kann so in einem einzigen Arbeitsgang eine formschlüssige Randeinfassung hergestellt werden.

Vorzugsweise handelt es sich bei der Begrenzungsform gemäß der Erfindung um eine offene Form. Die Begrenzungsform ist dann zur Rotationsachse hin offen. Schon allein dadurch unterscheidet sich dieses Verfahren wesentlich vom Spritzgussverfahren, das eine geschlossene und dichte Form erfordert. Weiterhin muss der Kunststoff beim Spritzgussverfahren unter Druck eingebracht werden, was beim vorliegenden Schleuderverfahren nicht nötig ist.

Bei dem erfindungsgemäßen Verfahren handelt es sich folglich um ein Schleuderverfahren. Das einzufassende Element wird in Rotation versetzt. Die Drehung kann dabei sowohl horizontal als auch vertikal erfolgen. Hierdurch wirken auf die eingebrachte Vergussmasse Zentrifugalkräfte ein, so dass sich die Vergussmasse im Randbereich des scheibenförmigen Elementes aufkonzentriert. Die auftretenden Zentrifugalkräfte wirken dabei insbesondere der Kapillarwirkung entgegen, welche andernfalls dazu führen würde, dass Vergussmasse in das Element, beispielsweise die Membran eingesaugt wird und in Richtung zum Mittelpunkt des scheibenförmigen Elementes wandert. Die Vergussmasse wird folglich nur im Randbereich des Elementes abgelagert. Die Innenkante der Randeinfassung ist bei dem erfindungsgemäßen Verfahren bestimmbar. Eine Filtermembran beispielsweise wird somit nicht verstopft werden, sondern es wird eine Randeinfassung mit definierter Stärke und damit Innenkante um sie herum gebildet werden. Der Aufbau der Randeinfassung erfolgt dabei von außen nach innen. Vergussmasse wird zuerst im äußersten Bereich abgelagert und dringt dann immer weiter in Richtung zum Mittelpunkt des Elementes vor. Dadurch ist es möglich, eine eng begrenzte formschlüssige Randeinfassung in der Form eines geschlossenen Ringes herzustellen.

Die Stärke der Randeinfassung ist leicht durch die Menge der angebotenen Vergussmasse und die Rotationsgeschwindigkeit einstellbar. Es stellte sich beispielsweise in Versuchen der Erfinder für scheibenförmige Elemente mit einem Durchmesser von 312 mm und einer Stärke von 4 mm eine Drehgeschwindigkeit von 500-4000 U/min als geeignet heraus. Für einen Fachmann ist es ein Leichtes, durch entsprechende Versuche, eine auf den Durchmesser und die Gesamtdicke des scheibenförmigen Elementes und die entsprechende Gussform angepasste Menge an Vergussmasse und Drehgeschwindigkeit herauszufinden.

Das erfindungsgemäße Verfahren hat vielfältige Vorteile.
* So sind jegliche Größen an scheibenförmigen Elementen mit einer formschlüssigen Randeinfassung ausstattbar. Der Fachmann braucht lediglich eine entsprechende Begrenzungsform herzustellen und die Menge an Vergussmasse und die entsprechende Drehgeschwindigkeit zu ermitteln. Es können ferner auch um profilierte Filtermittel formschlüssige und dichtende Randeinfassungen gebildet werden.
* Anders als für Spritzgussverfahren, für welche die Werkzeuge und Maschinen gewöhnlich sehr teuer sind, sind die Anforderungen an die (Guss-)Werkzeuge, Begrenzungsformen und Geräte zur Durchführung des vorliegenden Verfahrens vergleichsweise günstig.
* Weiterhin sind im Grunde sämtliche planen und profilierten Flachmaterialien, z. B. Edelstahlbleche und Edelstahlgewebe, Glasfaserkunststoff, Keramik, Kompositwerkstoffe, beschichtete, insbesondere nanobeschichtete Werkstoffe, Polytetrafluorethylen (PTFE), Polysulfonether und andere Kunststoffe miteinander verbindbar. Selbst Materialien, die an sich nicht ohne weiteres zu fügen sind, wie beispielsweise Teflon, sind durch das Verfahren verbindbar. Hierfür wird ein Teflonelement im Randbereich perforiert, beispielsweise indem der Randbereich mit Löchern versehen wird. Dadurch wird eine mechanische Verbindung durch Eingriff der Vergussmasse in die Perforationen geschaffen.
* Bei dem Randbildungs- und Fügungsverfahren handelt es sich um ein äußerst materialschonendes Verfahren. Es treten keinerlei Druckstellen und Materialschwächungen auf; Stellen, an denen es beim Einsatz der Elemente zum Bruch kommen kann, können folglich gar nicht erst entstehen. Es treten auch keine Schrumpfung und Angusszapfen auf, wie sie bei Kunststoffheißspritzgussverfahren üblich sind. Anders als bei Schweißverfahren, bei denen aufgrund der punktuellen Bearbeitung Dichtigkeitsprobleme häufig sind, treten sie bei dem erfindungsgemäßen Verfahren nicht nur gar nicht erst auf sondern werden gerade dadurch gelöst. Schließlich tritt bei Randeinfassungen und Verbindungen, die mittels Zusammenpressen von Ringen etc. gebildet werden, eine unterschiedliche Verformung des Randbereichs auf, z. B. lokal auf einer Seite. Da die Ränder des Elementes keinem Druck ausgesetzt sind, können keine Verformungen oder sonstigen Schädigungen von diesem auftreten.
* Es war bis jetzt im Stand der Technik nicht möglich, "flache" Randeinfassungen von Filtermitteln bereitzustellen ohne die Filtermeinbranen mechanisch stark zu beanspruchen. Unabhängig davon, ob z. B. geschweißt worden ist oder ob ein Kunststoffring die einzelnen Lagen fügte, trat stets eine Beschädigung des Materials auf, z. B. indem die Lagen zusammengepresst worden sind. Nun kann eine Randeinfassung angefertigt werden, die nicht nur extrem flach ist, d. h. im Wesentlichen keine Kante zu den äußeren Filtermembranlagen aufweist, sondern die dem Material keinerlei Schädigung zufügt.
* Die fertige Randeinfassung ist außerdem sehr homogen; es treten keine Lufteinschlüsse auf. Zudem durchdringt die Vergussmasse im Randbereich das Element, so dass eine gute Fügung erfolgt. Die Randeinfassung hält dadurch besser als z. B. verschweißte Elemente, so dass bei Filtermitteln auch Rückspülen problemlos möglich ist, ohne Gefahr, dass sich die einzelnen Lagen voneinander lösen. Die Vergussmasse bleibt jedoch auf den Randbereich beschränkt, d. h. wird nicht durch Kapillarkräfte in Richtung zum Zentrum des Elementes geleitet. Damit steht bei Filtermitteln die maximale Filterfläche zur Verfügung.
* Weiterhin sind auch poröse Drainagegewebe und Abstandshalter (sog. Spacer) ohne Absperrung im Randbereich fügbar. Durch die Randeinfassung wird zugleich das Element abgedichtet und, bei Fügen von mehreren Elementen, erfolgt ein gegenseitiges Abdichten der einzelnen Lagen zueinander. Dies ist bei Filtermitteln sehr wichtig. Filtrat, das die Membranen durchdrungen hat, darf nicht mehr mit unfiltrierter Suspension vermischt werden. Deshalb ist es wichtig, die einzelnen Räume im Filtermittel voneinander zu separieren. Durch die Abdichtung im Randbereich ist dies erfolgt.
* Durch das erfindungsgemäße Verfahren kann ein scheibenförmiges Element in einem einzigen Arbeitsgang mit einer formschlüssigen, dichtenden Randeinfassung versehen werden. Es kann ferner gleichzeitig gefügt und abgedichtet werden und es können sogar weitere Teile, wie Düsen, elektronische Bauteile etc. integriert werden. Damit entfallen zusätzliche Arbeitsschritte, wie sie bei gewissen Verfahren im Stand der Technik notwendig sind.

Als "Vergussmasse" kann jedes Material eingesetzt werden, mit dem eine Randeinfassung hergestellt werden kann. Vorzugsweise werden Kunststoffe eingesetzt. Diese sollen zu einer festen Masse aushärten. Das Material muss so beschaffen sein, dass es den späteren Anforderungen und Bedingungen, denen das fertige Element ausgesetzt ist, Genüge tun kann, z. B. im Falle von Filtermitteln hinsichtlich der chemischen und thermischen Beständigkeit oder der Verträglichkeit mit zu filternden Stoffen, z. B. Lebensmitteln. Es kann sich bei der Vergussmasse um organische und anorganische Verbindungen handeln, die wiederum physikalisch abbindend oder auch chemisch bzw. mittels Lichteinwirkung härtend sein können, z. B. unter Infrarot oder UV-Lichteinstrahlung. Auch Wachse oder andere Dichtmaterialien, ebenso wie Metalle, z. B. Blei, Zinn oder Aluminium, und andere Fügewerkstoffe könnten beispielsweise als Vergussmasse eingesetzt werden.

Die Vergussmasse wird in die Begrenzungsform eingebracht. Dies kann in flüssiger Form oder auch als Feststoff, z. B. als Granulat, der dann verflüssigt wird, erfolgen. Flüssige Vergussmasse wird bevorzugt während des Rotierens des Elementes eingebracht, z. B. eingegossen. Dies erfolgt bevorzugt bereits in dem Bereich, wo später die Randeinfassung gebildet werden soll. Grundsätzlich ist es jedoch ebenfalls möglich, die Vergussmasse im mittleren Bereich des Elementes, mit Abstand zum Rand einzubringen. Die flüssige Vergussmasse kann beim Fügen von mehreren Elementen auch zuerst auf das oberste Element aufgetragen werden und dann erst werden die Elemente rotiert. Auch hierdurch wird die Randeinfassung ausgebildet werden. Liegt die Vergussmasse beim Einbringen als Granulat vor, so wird dieses bevorzugt in die Begrenzungsform eingebracht, bevor die Drehung gestartet wird. Das Element wird dann zur Rotation gebracht, wodurch das Granulat in den Randbereich gelangt. Durch Einwirken von Hitze schmilzt das Granulat und bildet die Randeinfassung.

Mit dem erfindungsgemäßen Verfahren lassen sich auch Randeinfassungen herstellen, in die Sensoren oder andere elektronische Bauteile eingegossen sind. Hierfür werden die Bauteile wie die scheibenförmigen Elemente in der Begrenzungsform so angeordnet, wie sie vergossen werden sollen. Nun werden in einem einzigen Arbeitsgang zugleich die Randeinfassung gebildet und die Bauteile eingebaut. Es lassen sich auf diese Weise selbstverständlich auch sämtliche anderen Teile in die Randeinfassung einbauen, wie z. B. Magnete, Metallelemente, Spulen etc.

Durch entsprechende Profilierung der Begrenzungsform kann die Randeinfassung mit Profilen versehen werden. Damit können z. B. strömungstechnisch günstige Randeinfassungen um Filtermittel ausgebildet werden. Als Beispiel hierfür seien sog. Leitschaufeln genannt, d. h. Vorsprünge und Profilierungen der Randeinfassung, die die Strömung über die Filtermittel insbesondere bei der Cross-Flow-Filtration günstig beeinflussen.

Es ist auch möglich, ein scheibenförmiges Element im vorgespannten Zustand mit der Randeinfassung zu versehen. So können z. B. eine oder mehrere Lagen eines Filtermittels, z. B. ein Metallgewebe, Glasfasergewebe, Stränge, Stäbe, Streben etc., vorgespannt werden. Dies könnte z. B. in der Art eines Tennisschlägers oder Fahrradreifens erfolgen. Stahleinlagen können z. B. mit 50-300 N/mm² vorgespannt werden. Wird nun die Randeinfassung ausgebildet, so bleibt die Vorspannung erhalten und das Filtermittel wird äußerst stabil sein. Auftretende Kräfte werden in die Randeinfassung eingeleitet werden. Es können somit sehr dünne und stabile Filtermittel oder sonstige scheibenförmige Elemente hergestellt werden.

Die erflndungsgemäße Begrenzungsform weist ein Oberteil und ein Unterteil auf, die miteinander die Begrenzungsform ausbilden. Es wird darauf hingewiesen, dass Oberteil und Unterteil auch einstückig ausgebildet sein können, z. B. bei einer flexiblen Form oder bei einer verlorenen Form. In der Begrenzungsform ist ein Ringkanal ausgebildet. Der Ringkanal kann umlaufend oder abschnittsweise ausgebildet sein. Die Begrenzungsform ist so dimensioniert, dass die Filtermittel, um die eine Randeinfassung gebildet werden soll, einbringbar sind und dass sie von der Begrenzungsform umgeben werden, wobei im Randbereich des Filtermittels bevorzugt ein gewisser Abstand verbleibt, der durch den Ringkanal gebildet wird. In den Ringkanal ist dann die Vergussmasse einbringbar, die die Randchfassung ausbildet. Bevorzugt ist ein Deckel vorgesehen, mit dem das Filtermittel abgedeckt wird und der es hält, so dass es während der Rotation an Ort und Stelle verbleibt und nicht verrutscht, wodurch die Ausbildung einer gleichmäßigen, homogenen Randeinfassung gewährleistet wird.

Das Unterteil der Begrenzungsform ist bevorzugt durchgängig ausgebildet, d. h. in der Art eines Bodens. Für die Durchführung des erfindungsgemäßen Verfahrens ist es jedoch ausreichend, wenn die Begrenzungsform die Form eines Ringes hat, d. h. wenn Unterteil und Oberteil lediglich im Randbereich des Elementes ausgebildet sind und der mittlere Bereich offen bleibt. Die Begrenzungsform kann ferner im Bereich des Ringkanals eine oder mehrere Bohrungen aufweisen, über die überschüssige Vergussmasse abgeführt werden kann, so dass die Stärke der Randeinfassung stets gleichbleibend ist, unabhängig von der Dicke der einzufassenden Elemente und der eingebrachten Menge an Vergussmasse.

Die Begrenzungsform kann auch eine verlorene Form sein, d. h. eine Form, die nach der Durchführung des Verfahrens integraler Bestandteil der Randeinfassung geworden ist. Eine solche Begrenzungsform könnte in der Art eines Kunststoffringes vorliegen, der um das einzufassende Element herumgelegt wird. Die eingebrachte Vergussmasse wird dann die Begrenzungsform mit dem Element verbinden.

Für die erfindungsgemäßen Verfahren ist die Begrenzungsform so ausgelegt, dass sie ein einzelnes bzw. mehrere übereinander gelegte bzw. hintereinander gestellte Elemente umgibt. Sie ist besonders geeignet für kreisrunde Elemente, die in die Form eingelegt werden.

Die Begrenzungsform kann aus jedem geeigneten Material hergestellt sein, insbesondere aus Metall oder Kunststoffen, auch aus flexiblem Material wie Silikon. Der Fachmann wird erkennen, welches Material für den intendierten Zweck besonders geeignet ist.

Nachfolgend wird die Erfindung anhand der Zeichnungen näher erläutert und beschrieben. Es zeigen:
- Fig. 1:: eine erfindungsgemäße Begrenzungsform in Aufsicht;
- Fig. 2:: einen teilweisen Schnitt entlang der Linie II-II durch die Begrenzungsform der Fig. 1 vor dem Einbringen von Vergussmasse (A) und nach der Ausbildung der Randeinfassung (B);
- Fig. 3:: einen teilweisen Schnitt durch ein fertig eingefasstes scheibenförmiges Element;
- Fig. 4:: einen teilweisen Schnitt durch ein weiteres fertig eingefasstes scheibenförmiges Element; und
- Fig. 5:: eine Aufsicht auf eine schematische Darstellung einer Begrenzungsform_{,} die nicht Gegenstand der vorliegenden Erfindung ist.

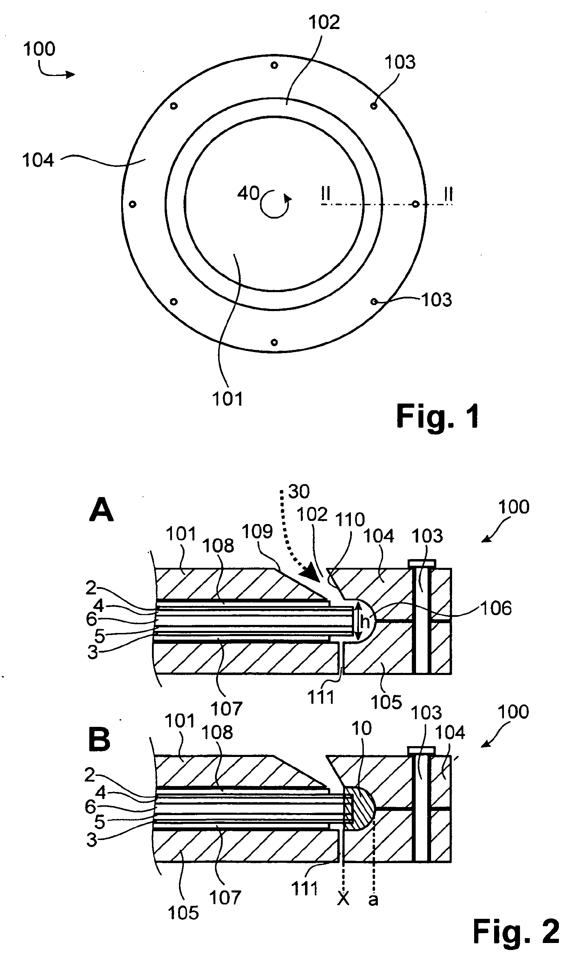

Aus einer Zusammenschau der Fig. 1-4 wird das erfindungsgemäße Verfahren, sowie der Aufbau einer erfindungsgemäßen Begrenzungsform deutlich. Exemplarisch wird die Herstellung eines scheibenförmigen Elementes in der Form eines Filtermittels 1 vorgestellt.

Die Begrenzungsform 100 besteht aus einem Oberteil 104 und einem Unterteil 105. Diese werden miteinander über Bolzen 103 zur Begrenzungsform 100 verbunden. Vorgesehen ist weiter ein Deckel 101, der auf die eingelegten Elemente 2, 3, 4, 5 und 6 zentriert aufgelegt wird. Im Bedarfsfall kann der Deckel 101 an dem Oberteil 104 und/oder dem Unterteil 105 fixiert werden. Prinzipiell kann der Deckel 101 auch entfallen. Es hat sich jedoch als vorteilhaft erwiesen, einen solchen vorzusehen, da dadurch ein gewisser Anpressdruck bereitgestellt wird, mit dem die eingelegten Elemente 2-6 eng aneinander gebracht und zusammengehalten werden, so dass sie auch während dem Drehvorgang exakt aufeinander liegen bleiben. Im Fall einer flexiblen oder einer verlorenen Begrenzungsform können Oberteil 104 und Unterteil 105 grundsätzlich auch einstückig ausgebildet sein. Sie bilden einen Ringkanal 106 aus, der die Gestalt und die Abmessungen der späteren Randeinfassung 10 abbildet und vorgibt. Zum Einbringen von Vergussmasse ist ein Eingusskanal 102 vorgesehen, der im Ausführungsbeispiel der Figuren 1-4 umlaufend ausgebildet ist. Der Eingusskanal 102 kann auch entfallen oder es können eine oder mehrere Bohrungen vorgesehen sein, über welche die Vergussmasse eingebracht wird. Zur Schonung der Elemente 2-6 können zwischen der Begrenzungsform 100 und den Elementen 2-6 Gummiplatten 107 und 108 vorgesehen sein. Anstelle einer Platte aus Gummi kann auch eine solche aus jedem anderen dafür geeigneten Material eingesetzt werden, z. B. aus Silikon oder Filz. Wie unten erläutert werden wird, kann es auch vorteilhaft sein, auf die Gummiplatten 107 und 108 zu verzichten.

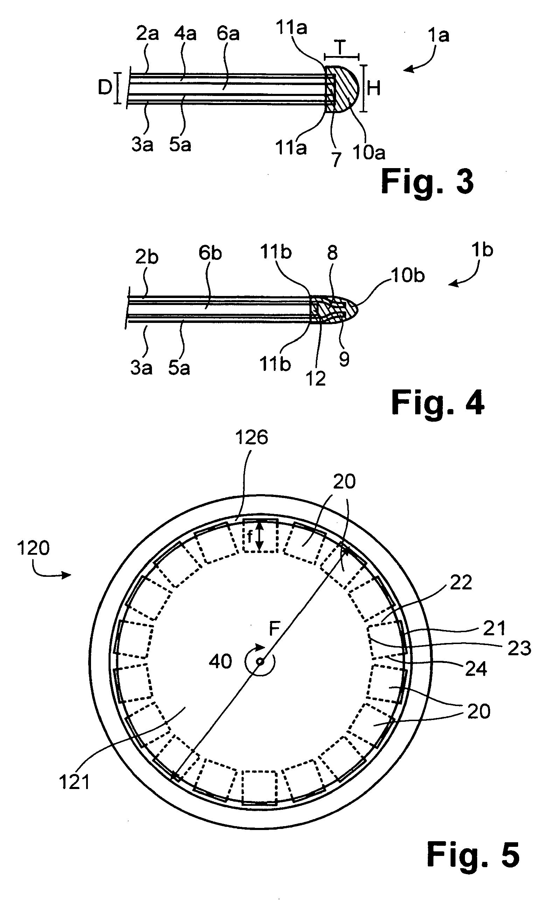

Für die Randeinfassung und Fügung eines scheibenförmigen Elementes, beispielsweise eines Filtermittels 1a (Fig. 3) werden die hierfür notwendigen Elemente 2a-6a übereinander in die Begrenzungsform 100 auf die Gummiplatte 107 eingelegt. Nachdem die obere Gummiplatte 108 aufgelegt worden ist, wird der Deckel 101 ebenfalls aufgelegt. Es ist der in Fig. 2A dargestellte Zustand erreicht. Die Begrenzungsform 100 wird nun rotiert, wie angedeutet durch den Pfeil 40 in Fig. 1. Selbstverständlich kann die Rotation sowohl links- als auch rechtsherum erfolgen. Während die Begrenzungsform 100 und damit die Elemente 2a-6a rotieren, wird flüssige Vergussmasse über den Eingusskanal 102 eingebracht, wie durch den Pfeil 30 in Fig. 2A angedeutet. Aus Fig. 2B wird deutlich, dass sich die Vergussmasse im Ringkanal 106 ansammelt, bedingt durch die Rotation. Die Vergussmasse wird in den Ringkanal 106 hineingeschleudert und dort lokalisiert. Nach dem Aushärten der Vergussmasse hat sich die Randeinfassung 10 um den Randbereich 7 der Elemente 2a-6a herum gebildet. Das Filtermittel 1a kann nun aus der Begrenzungsform 100 entnommen werden.

Der Eingusskanal 102 wird durch die Kante 109 des Deckels 101 und die Kante 110 des Oberteils 104 gebildet, wie aus Fig. 2 ersichtlich ist. Bevorzugt ist zumindest die Kante 109 abgeschrägt. An dieser Schräge prallt die Vergussmasse beim Eingießen in die Begrenzungsform 100 ab und erfährt eine vorteilhafte Lenkung - zusätzlich zu der Zentrifugalkraft, die durch die Rotation auftritt - in Richtung zum Ringkanal 106. Bevorzugt ist auch die Kante 110 etwas abgeschrägt. Dadurch werden scharfe Ecken und Kanten vermieden, die Vergussmasse wird gelenkt und Stellen, an denen eine Verschmutzung auftreten kann, werden reduziert. Durch diese Gestaltung der Begrenzungsform 100 hat sich gezeigt, dass sie vergleichsweise wenig anfällig ist für Verschmutzungen. Da die Vergussmasse durch die Abschrägungen der Kanten 109 und 110 in Kombination mit der durch die Drehung auftretenden Zentrifugalkraft optimal in den Ringkanal 106 gelenkt wird, kommt sie mit anderen Bereichen der Elemente 2-6 nicht in Berührung. Die einwirkende Zentrifugalkraft verhindert im Wesentlichen ein Anhaften von Vergussmasse auf den Elementen 2-6 und auf anderen Teilen der Begrenzungsform 100. Sie wird dort konzentriert, wo sie die Randeinfassung 10 ausbilden soll, nämlich im Randbereich 7 des Filtermittels 1a.

Aus dem Schnitt der Fig. 2 wird klar, dass die Menge der Vergussmasse und die Gestalt des Ringkanals 106 die Stärke der Randeinfassung 10 bestimmen. Der Ringkanal 106 gibt durch seine Gestalt die Form der späteren Randeinfassung 10 vor. Die Höhe H der Randeinfassung 10a wird durch die Höhe h des Ringkanals 106 bestimmt. Die Höhe h ist dabei mindestens so groß, wie die Höhe D des einzelnen einzufassenden Elementes bzw. der übereinander gelegten, einzufassenden Elemente 2-6. Im Ausführungsbeispiel der Fig. 1-3 ist vorzugsweise h > D. Die Tiefe T der Randeinfassung 10a wird bei gegebenem Ringkanal 106 durch die Menge an Vergussmasse bestimmt. T entspricht dem Abstand der Kante X der Randeinfassung 10 von dem Scheitelpunkt a des Ringkanals 106. Ist die Menge an Vergussmasse geringer als in dem vorgestellten Beispiel, so wird die Kante X weiter in Richtung hin zum Scheitelpunkt a ausgebildet; T wird kleiner. Wird mehr Vergussmasse eingebracht, so verschiebt sich die Kante X in Richtung zum Mittelpunkt des Filtermittels 1a; T wird größer. Es ist für den Fachmann leicht, die optimale Menge an Vergussmasse einzustellen, so dass eine ausreichend starke Randeinfassung und im Falle des Fügens ein guter Verbund der Elemente 2-6 erzielt wird, wobei gleichzeitig z. B. eine möglichst große Filterfläche erhalten bleibt. Die Einstellung der Menge an Vergussmasse wird im Ausführungsbeispiel der Fig. 2 durch eine Bohrung 111 erleichtert. Die Bohrung 111 ist im Unterteil 105 der Begrenzungsform 100 vorgesehen; sie könnte jedoch auch im Oberteil vorgesehen sein. Sie dient der Abführung von Vergussmasse. Wenn die eingebrachte Menge an Vergussmasse die Bohrung 111 erreicht, wird überschüssige Vergussmasse durch die Bohrung 111 nach unten abfließen. Somit ist es einfach, stets eine gleich starke Randeinfassung 10 auszubilden.

Das in den Ausführungsbeispielen der Fig. 1-2 hergestellte und in Fig. 3 ausgeformt dargestellte Filtermittel 1a besteht aus fünf Elementen, bezeichnet in Fig. 3 mit 2a-6a. Bei dem mittleren Element 6a handelt es sich um Abstandsgewebe, auch Spacer bezeichnet. Dieses führt das Filtrat beim späteren Einsatz des Filtermittels 1a einer Filtratableitung zu. Weiterhin hält es die eigentlichen Filtermembranen auf Abstand. Das Abstandsgewebe wird von je einem Element 5a bzw. 4a umgeben, bei denen es sich hier um ein Grobdrainagegewebe handelt. Schließlich wird das Filtermittel nach außen von den Elementen 2a und 3a abgeschlossen, den eigentlichen Filtermembranen. Ihre Porengröße bestimmt die Filtrationsleistung. Im Ausführungsbeispiel der Fig. 1-3 haben die Elemente 2a-6a zumindest annähernd denselben Durchmesser. Ihre Ränder liegen jeweils übereinander (vgl. Bezugszeichen 7).

In einer alternativen Ausführung, dargestellt in Fig. 4, können die Durchmesser der einzelnen Elemente jedoch auch unterschiedlich sein. Das Filtermittel 1b besteht aus drei Elementen, 2b, 3b und 6b. Das mittlere Element 6b hat einen kleineren Durchmesser als die es umgebenden Elemente 2b und 3b. Deren Randbereiche 8 und 9 stehen über den Randbereich 12 des Elementes 6b hinaus. Diese Randbereiche 8, 9 können dann zusammengebracht werden, wie aus der Fig. 4 ersichtlich. Dadurch ist es möglich eine vergleichsweise flache Randeinfassung 10b auszubilden, ohne oder mit nur einem geringen Absatz 11b. Der Absatz 11a der Randeinfassung 10a ist dagegen vergleichsweise groß (vgl. Fig. 3). Diese alternative Ausführung eignet sich besonders gut, um ein sehr flaches Filtermittel 1b bereitzustellen. Es wird jedoch darauf hingewiesen, dass eine sehr flache Randeinfassung auch hergestellt werden kann, wenn das oder die scheibenförmigen Elemente denselben Durchmesser haben (wie in Fig. 1-3). Werden die Gummiplatten 107, 108 weggelassen, so liegen die Elemente 2-6 direkt an dem Unterteil 105 und dem Deckel 101 an. Dadurch entfällt die Ausbildung eines Absatzes 11a.

In Fig. 5 ist schematisch eine Begrenzungsform 120, die nicht Gegenstand der vorliegenden Erfindung ist, dargestellt. Sie ist grundsätzlich ähnlich aufgebaut wie die Begrenzungsform 100. Der Durchmesser F, gemessen vom Scheitelpunkt des Ringkanals 126, ist jedoch sehr viel größer als der Durchmesser f der scheibenförmigen Elemente 20. Wie aus der Darstellung ersichtlich werden mehrere scheibenförmige Elemente 20 nebeneinander in die Begrenzungsform 120 eingelegt. Die Seite 21 jedes scheibenförmigen Elementes 20 wird dabei in den Ringkanal 126 eingelegt, mit einem gewissen Abstand zu dessen Scheitelpunkt. Durch die Drehung 40 wird Vergussmasse in den Ringkanal 126 geschleudert und es wird eine Randeinfassung an der Seite 21 ausgebildet. Indem nun die Seite 22 in den Ringkanal eingebracht wird, wird dort eine Randeinfassung ausgebildet. Mit den Seiten 23 und 24 wird ebenso verfahren bis sämtliche Seiten 21-25 mit einer Randeinfassung versehen sind, womit die umlaufende Randeinfassung gebildet worden ist. Die Begrenzungsform 120 kann ebenfalls einen Deckel 121 aufweisen, der auf die Elemente 20 aufgelegt wird. Zwischen Deckel 121 und dem Oberteil der Begrenzungsform 120 wird wiederum ein Eingusskanal ausgebildet.

## Patentansprüche

1. Verfahren zur Ausbildung einer Randeinfassung (10) eines Filtermittels,
**dadurch gekennzeichnet, dass**
eine Begrenzungsform (100, 120) bereitgestellt wird, in welcher zumindest ein kreisrundes scheibenförmiges Filtermittel angeordnet wird und welche das zumindest eine Filtermittel zumindest randseitig umgibt,
und dass das zumindest eine Filtermittel in Drehung (40) versetzt wird, wodurch sich in die Begrenzungsform eingebrachte Vergussmasse im Randbereich (7, 8, 9, 12) des zumindest einen Filtermittels lokalisiert und dort aushärtet, so dass eine Randeinfassung (10) hergestellt ist, die das zumindest eine Filtermittel Formschlüssig und allseitig dichtend umgibt.

2. Verfahren nach Anspruch 1,
**dadurch gekennzeichnet, dass** das zumindest eine Filtermittel aus zumindest zwei Elementen besteht, die übereinander in der Begrenzungsform angeordnet werden, und dass die hergestellte Randeinfassung die Elemente zu einem Filtermittel fügt.

3. Verfahren nach Anspruch 1 oder 2, **dadurch gekennzeichnet, dass** die Vergussmasse im Randbereich des zumindest einen Filtermittels eingebracht wird, während sich dieses dreht.

4. Verfahren nach einem der Ansprüche 1 bis 3, **dadurch gekennzeichnet, dass** die Vergussmasse beim Einbringen flüssig ist.

5. Verfahren nach einem der Ansprüche 1 bis 3, **dadurch gekennzeichnet, dass** die Vergussmasse als Granulat eingebracht wird und während des Drehens Hitze einwirkt, so dass das Granulat schmilzt und die Randeinfassung gebildet wird.

6. Verfahren nach einem der Ansprüche 2 bis 5, **dadurch gekennzeichnet, dass** die zumindest zwei Elemente Filtermembranen und/oder Abstandsgewebe sind, die miteinander zu dem Filtermittel gefügt werden, wobei zumindest ein Element eine Filtermembran ist.

7. Verfahren nach einem der Ansprüche 2 bis 5, **dadurch gekennzeichnet, dass** zumindest ein Element vor der Ausbildung der Randeinfassung vorgespannt wird und im vorgespannten Zustand die Randeinfassung ausgebildet wird.

8. Verfahren nach einem der vorangegangenen Ansprüche, **dadurch gekennzeichnet, dass** in die Randeinfassung elektronische Bauteile, insbesondere Sensoren, oder andere Teile, insbesondere Magnete, eingefügt werden, indem sie mit dem zumindest einen Filtermittel in der Begrenzungsform dort angeordnet werden, wo sie in die Randeinfassung eingefügt werden sollen.

9. Verfahren nach einem der vorangegangenen Ansprüche, **dadurch gekennzeichnet, dass** das zumindest eine Filtermittels in die Begrenzungsform eingelegt oder eingestellt wird.

10. Begrenzungsform (100, 120) zur Verwendung in einem Verfahren nach einem der vorangegangenen Ansprüche, in der zumindest ein kreisrundes scheibenförmiges Filtermittel aufnehmbar ist,
**dadurch gekennzeichnet, dass** sie ein Oberteil (104) und ein Unterteil (105) aufweist, die miteinander zur Begrenzungsform (100, 120) verbindbar sind, und dass Oberteil und Unterteil einen Ringkanal (106, 126) ausbilden, in den Vergussmasse einbringbar ist und der so geformt ist, dass eine Randeinfassung (10) um das zumindest eine Filtermittel herum ausbildbar ist.

11. Begrenzungsform nach Anspruch 10, **dadurch gekennzeichnet, dass** ein Deckel (101,121) vorgesehen ist, der über das zumindest eine Filtermittel aufsetzbar ist, wobei zwischen der Kante (109) des Deckels und der Kante (110) des Oberteils ein Eingusskanal (102) ausgebildet ist, über den die Vergussmasse einbringbar ist.

12. Begrenzungsform nach Anspruch 10 oder 11, **dadurch gekennzeichnet, dass** die Kante (109) des Deckels abgeschrägt ist und/oder dass die Kante (110) des Oberteils abgeschrägt ist.

13. Begrenzungsform nach einem der Ansprüche 10 bis 12, **dadurch gekennzeichnet, dass** zumindest eine Bohrung (111) im Bereich des Ringkanals ausgebildet ist, über den überschüssige Vergussmasse ableitbar ist.

## Claims

1. Method for forming a surround (10) of a filler means
**characterized**
**in that** a mould (100, 120) is provided wherein at least one circular disk shaped filter means is placed, the mould surrounding the at least one filter means at least at a rim thereof,
and **in that** the at least one filter means is rotated (40) whereby potting compound introduced into the mould localizes in the rim area (7, 8, 9, 12) of the at least one filter means and hardens there so that a surround (10) is formed surrounding the at least one filter means in a form-locking manner and sealing on all sides.

2. Method according to claim 1,
**characterized**
**in that** the at least one filter means consists of at least two elements being stacked one upon the other in the mould,
and **in that** the surround formed joins the elements to a filter means.

3. Method according to claim 1 or 2,
**characterized in that**
the potting compound is introduced into the rim area of the at least one filter means while it is rotating.

4. Method according to one of the claims 1 to 3,
**characterized in that**
during introducing the potting compound is liquid.

5. Method according to one of the claims 1 to 3,
**characterized in that**
the potting compound is introduced as granulate and heat is applied during rotation thus melting the granulate and forming the surround.

6. Method according to one of the claims 2 to 5,
**characterized in that**
the at least two elements are filter membranes and/or spacing fabrics being joined together to the filter means, wherein at least one element is a filter membrane.

7. Method according to one of the clalms 2 to 5,
**characterized in that**
at least one element is pre-stressed before forming the surround and the surround is formed in the pre-stressed state.

8. Method according to one of the precedent claims,
**characterized in that**
electronic devices particularly sensors or other devices particularly magnets are integrated into the surround **In that** the devices are placed along with the at least one filter means in the mould at the place where they are to be integrated into the surround.

9. Method according to one of the precedent claims,
**characterized in that**
the at least one filter means is laid into or set up in the mould.

10. Mould (100, 120) for use in a method according to one of the precedent claims in which at least one circular disk shaped filter means may be housed
**characterized**
**in that** the mould has an upper part (104) and a lower part (105) being joinable together to the mould (100, 120),
and **in that** the upper part and the lower part form a ring channel (106, 126) into which potting compound may be introduced, the ring channel being shaped In a manner that a surround (10) around the at least one filter means is formable.

11. Mould (100, 120) according to claim 10,
**characterized in that**
a lid (101, 121) is provided which may be put above the at least one filter means, wherein between an edge (109) of the lid and an edge (110) of the upper part a pouring channel (102) is formed through which the potting compound may be introduced.

12. Mould (100, 120) according to claim 10 or 11,
**characterized In that**
the edge (109) of the lid is tapered and/or the edge (110) of the upper part is tapered.

13. Mould (100, 120) according to claim 10 to 12,
**characterized in that**
at least one bore (111) is formed in the area of the ring channel through which surplus potting compound may be drained.

## Revendications

1. Procédé pour la formation d'un encadrement de bordure (10) d'un moyen de filtration, **caractérisé en ce qu'**un moule de délimitation (100, 120) est mise à disposition dans laquelle au moins un moyen de filtration circulaire en forme de disque est placé et qui entoure au moins sur le côté des bords le moyen de filtration qui existe au moins et que le moyen de filtration qui existe au moins est mis en rotation (40) si bien que une masse de moulage mise en place dans le moule de délimitation se localise et durcit dans la zone des bords (7, 8, 9, 12) du moyen de filtration qui existe au moins si bien qu'un encadrement de bordure (10) est produit qui entoure le moyen de filtration qui existe au moins par assemblage de forme et de manière étanche sur tous les côtés.

2. Procédé selon la revendication 1, **caractérisé en ce que** le moyen de filtration qui existe au moins est constitué par au moins deux éléments qui sont placés l'un au-dessus de l'autre dans le moule de délimitation et que l'encadrement de bordure produit assemble les éléments en un moyen de filtration.

3. Procédé selon la revendication 1 ou 2, **caractérisé en ce que** la masse de moulage est mise en place dans la zone des bords du moyen de filtration qui existe au moins pendant que celui-ci tourne.

4. Procédé selon l'une des revendications 1 à 3, **caractérisé en ce que** la masse de moulage est liquide lors de la mise en place.

5. Procédé selon l'une des revendications 1 à 3, **caractérisé en ce que** la masse de moulage est mise en place en tant que granulés et que de la chaleur agit pendant la rotation si bien que les granulés fondent et l'encadrement de bordure se forme.

6. Procédé selon l'une des revendications 2 à 5, **caractérisé en ce que** les deux éléments qui existent au moins sont des membranes de filtration et/ou des tissus d'espacement qui sont assemblés l'un avec l'autre en un moyen de filtration, au moins un élément étant une membrane de filtration.

7. Procédé selon l'une des revendications 2 à 5, **caractérisé en ce qu'**au moins un élément est précontraint avant la formation de l'encadrement de bordure et l'encadrement de bordure est formé à l'état précontraint.

8. Procédé selon l'une des revendications précédentes, **caractérisé en ce que** des composants électroniques, en particulier des capteurs, ou d'autres pièces, en particulier des aimants, sont insérés dans l'encadrement de bordure, cependant qu'ils sont placés avec le moyen de filtration qui existe au moins dans le moule de délimitation où ils doivent être insérés dans l'encadrement de bordure.

9. Procédé selon l'une des revendications précédentes, **caractérisé en ce que** le moyen de filtration qui existe au moins est inséré ou mise en place dans le moule de délimitation.

10. Moule de délimitation (100, 120) pour l'utilisation dans un procédé selon l'une des revendications précédentes dans laquelle au moins un moyen de filtration circulaire en forme de disque peut être logé, **caractérisé en ce qu'**elle présente une partie supérieure (104) et une partie inférieure (105) qui peuvent être reliées l'une à l'autre en le moule de délimitation (100, 120) et que la partie supérieure et la partie inférieure forment un canal annulaire (106, 126) dans lequel de masse de moulage peut être mise en place et qui est formé de telle manière qu'un encadrement de bordure (10) peut être formé autour du moyen de filtration qui existe au moins.

11. Moule de délimitation selon la revendication 10, **caractérisé en ce qu'**un couvercle (101, 121) qui peut être posé sur le moyen de filtration qui existe au moins est prévu, cependant qu'un canal de coulage (102) par lequel la masse de moulage peut être mise en place est configuré entre l'arête (109) du couvercle et l'arrête (110) de la partie supérieure.

12. Moule de délimitation selon la revendication 10 ou 11, **caractérisé en ce que** l'arrête (109) du couvercle est biseautée et/ou que l'arête (110) de la partie supérieure est biseautée.

13. Moule de délimitation selon l'une des revendications 10 à 12, **caractérisé en ce qu'**au moins une forure (111) est configurée dans la zone du canal annulaire par lequel l'excédent de masse de moulage peut être dérivé.
